# EUROPÄISCHE PATENTANMELDUNG

(11) **EP 4 600 580 A1**
(43) Veröffentlichungstag der Anmeldung: **13.08.2025**
(21) Anmeldenummer: 25154774.1
(22) Anmeldetag: 29.01.2025
(51) Int. Cl.: F24H 15/168, F24H 15/37, F24H 15/429, F24H 15/45, H02J 3/14

(54) **VERFAHREN ZUM STEUERN MINDESTENS EINES ELEKTRISCHEN WARMWASSERBEREITERS**

(30) Priorität: 08.02.2024 DE 102024103546
(71) Anmelder: Stiebel Eltron GmbH & Co. KG, 37603 Holzminden (DE)
(72) Erfinder: BAST, Oliver, 37603 Holzminden (DE); Laumann, Jan, 37586 Dassel (DE); Volkmar, Martin, 34454 Bad Arolsen (DE); Eberlein, Rainer, 37197 Hattorf (DE); Golüke, Dominik, 37671 Höxter (DE)

(57) **Zusammenfassung**

Verfahren zum Steuern mindestens eines elektrischen Warmwasserbereiters (240), welcher mindestens eine elektrisch Direktheizeinheit (241) zum direkten Erwärmen von Wasser aufweist, wobei der Warmwasserbereiter (240) mindestens eine erste und eine zweite Betriebsart (B1, B2) aufweist, wobei die erste Betriebsart (B1) eine Normalbetriebsart darstellt, bei der der Warmwasserbereiter (240) mit bis zur Maximalleistung betreibbar ist, wobei die zweite Betriebsart (B2) eine Betriebsart darstellt, bei der der Warmwasserbereiter (240) mit bis zu einer reduzierten Leistung, die kleiner als die Maximalleistung ist, betreibbar ist, mit den Schritten: - Steuern der mindestens einen elektrischen Direktheizeinheit (241) in der ersten Betriebsart (B1) basierend auf einer Warmwasseranforderung, - Empfangen von netzorientierten Steuerungsinformationen (121), und - Steuern der mindestens einen elektrischen Direktheizeinheit (241) in der zweiten Betriebsart (B2) basierend auf einer Warmwasseranforderung und einer reduzierten elektrischen Leistung, wenn die empfangenen netzorientierten Steuerungsinformationen (121) eine Anforderung zur Reduzierung der elektrischen Leistung aufweisen.

## Beschreibung

Die vorliegende Erfindung betrifft ein Verfahren zum Steuern mindestens eines Warmwasserbereiters sowie ein Haustechniksystem.

Zur Versorgung eines Gebäudes mit Warmwasser und zur Beheizung des Gebäudes sind unterschiedliche Verfahren bekannt. Zur energieeffizienten Warmwasserbereitung und Heizung werden beispielsweise Wärmepumpen eingesetzt. Wärmepumpen sind jedoch nicht in allen Gebäuden die beste Lösung.

Alternativ für die Warmwasserbereitung sind elektrische Durchlauferhitzer und Warmwasserspeicher bekannt. Hierbei wird das Wasser mittels einer elektrischen Heizeinheit direkt erwärmt.

Ein Durchlauferhitzer weist typischerweise ein Bedienelement auf, an welchem die Temperatur des Warmwassers eingestellt werden kann. Bei Bedarf wird die elektrische Heizeinheit, wie beispielsweise ein Blankdrahtheizkörper, aktiviert und das durch den Durchlauferhitzer fließende Wasser wird entsprechend erwärmt und am Ausgang wird die gewünschte Solltemperatur ausgegeben.

Wünschenswert ist ein effektiverer und effizienterer Betrieb eines elektrischen Warmwasserbereiters.

Diese Aufgabe wird durch ein Verfahren zum Steuern mindestens eines elektrischen Warmwasserbereiters nach Anspruch 1 sowie ein Haustechniksystem nach Anspruch 6 gelöst.

Somit wird ein Verfahren zum Steuern mindestens eines elektrischen Warmwasserbereiters vorgesehen. Der elektrische Warmwasserbereiter weist mindestens eine elektrische Direktheizeinheit zum direkten Erwärmen von Wasser auf. Der Warmwasserbereiter weist mindestens eine erste und zweite Betriebsart auf. Die erste Betriebsart stellt eine Normalbetriebsart dar, bei der der Warmwasserbereiter bis zur Maximalleistung der mindestens einen elektrischen Direktheizeinheit betreibbar ist. Die zweite Betriebsart stellt eine Betriebsart dar, bei welcher die mindestens eine elektrische Direktheizeinheit bis zu einer reduzierten Leistung betreibbar ist, die kleiner als die Maximalleistung ist. Dazu kann die mindestens eine elektrische Direktheizeinheit in der ersten Betriebsart basierend auf einer Warmwasseranforderung gesteuert werden. Bei einem Wasserbedarf kann somit das Warmwasser bis zur Maximalleistung der elektrischen Direktheizeinheit erwärmt werden. Der elektrische Warmwasserbereiter kann netzorientierte Steuerungsinformationen beispielsweise von einem externen Netzbetreiber empfangen. Daraufhin wird die mindestens eine elektrische Direktheizeinheit in der zweiten Betriebsart basierend auf einer Warmwasseranforderung und einer reduzierten elektrischen Leistung betrieben, wenn die empfangenen netzorientierten Steuerungsinformationen eine Anforderung zur Reduzierung der elektrischen Leistung aufweisen.

Die netzorientierten Steuerinformationen können von einem Netzbetreiber übertragen werden. Diese Steuerinformationen dienen dazu, an das Netz angeschlossene steuerbare elektrische Verbraucher zu einer reduzierten elektrischen Leistungsaufnahme zu veranlassen. Dies kann beispielsweise dann erfolgen, wenn in dem Netz nicht ausreichend Energie vorhanden ist, um alle angeschlossenen elektrischen Verbraucher gleichermaßen mit ausreichend Energie zu versorgen. Ein Beispiel hierfür können elektrische Lastspitzen darstellen. Somit wird vorgeschlagen, elektrische Warmwasserbereiter mit einer elektrischen Direktheizeinheit als steuerbare Verbrauchseinrichtung anzusehen. Auf Anforderung des Netzbetreibers hin (netzorientierte Steuerinformation) kann die elektrische Direktheizeinheit in eine Betriebsart versetzt werden, in welcher sie lediglich mit einer reduzierten Leistung betrieben werden kann. Die maximal abgebbare elektrische Leistung der elektrischen Direktheizeinheit wird somit in Abhängigkeit von dem elektrischen Energieversorgungsnetz gesteuert. Dies hat den Vorteil, dass die elektrischen Warmwasserbereiter mit elektrischen Direktheizeinheiten auch als steuerbare Verbrauchseinrichtungen angesehen werden und zur Stützung des Energieversorgungsnetzes aktiv beitragen können. Durch diese Steuerung kann beispielsweise mittels des Netzbetreibers verhindert werden, dass in einem kritischen Netzzustand, das heißt, wenn z. B. nicht ausreichend Energie in dem Energieversorgungsnetz vorhanden ist, ein weiterer zu starker Anstieg einer Energieanforderung durch elektrische Warmwasserbereiter erfolgt.

Gemäß einem Aspekt der Erfindung kann ein Wechsel von der zweiten in die erste Betriebsart erfolgen, wenn keine Anforderung zur Reduzierung der elektrischen Leistung in den empfangenen netzorientierten Steuerungsinformationen vorhanden ist oder wenn die empfangenen netzorientierten Steuerungsinformationen eine Anforderung zum Beenden der Reduzierung der elektrischen Leistung aufweist. Somit wird sowohl der Start als auch das Ende der zweiten Betriebsart (reduzierte Leistung) durch den Netzbetreiber über die netzorientierten Steuerungsinformationen initiiert.

Gemäß einem weiteren Aspekt der vorliegenden Erfindung können weitere Betriebsarten mit einer unterschiedlichen reduzierten Leistung vorgesehen sein, um eine fein abgestufte Steuerung der Leistungsaufnahme vorzusehen.

Gemäß einem weiteren Aspekt kann mittels einer Messeinheit die von dem elektrischen Warmwasserbereiter aufgenommene elektrische Leistung erfasst werden. Die Daten können intern verarbeitet werden oder an den Netzbetreiber weitergeleitet werden. Anhand dieser Daten kann überprüft werden, ob die von ihm initiierte Leistungsreduzierung erfolgt ist. Somit kann ein indirekter Rückkanal hinsichtlich der aufgenommenen elektrischen Leistung vorgesehen sein.

Der elektrische Warmwasserbereiter kann Teil eines Haustechniksystems mit weiteren elektrischen Verbrauchern sein. In dem Haustechniksystem kann eine Steuereinheit vorgesehen sein, welche die netzorientierten Steuerungsinformationen beispielsweise über ein Smart Meter Gateway empfängt und eine Steuerungsinformation an den elektrischen Warmwasserbereiter ausgibt. Diese Steuerungsinformationen können kabelgebunden direkt an den elektrischen Warmwasserbereiter ausgegeben werden. Alternativ dazu können diese Steuerungsinformationen mittels einer Drahtlosstrecke an einen Funkempfänger in oder an dem Warmwasserbereiter übertragen werden. Alternativ dazu können die Steuerungsinformationen auch in einer Powerline Communication an den Warmwasserbereiter übertragen werden. Somit kann die Übertragung der Steuerungsinformationen zum Schalten in die erste oder zweite Betriebsart auf unterschiedliche Art und Weise von einer Steuereinheit zu dem Warmwasserbereiter übertragen werden. Somit kann auf effektive Art und Weise eine Übertragung der Steuerungsinformationen an den Warmwasserbereiter an die baulichen Gegebenheiten angepasst werden.

In dem Haustechniksystem kann ein Energiemanagementsystem vorgesehen sein, welches zusätzlich zu der Steuereinheit implementiert ist. Alternativ dazu kann die Steuereinheit Teil des Energiemanagementsystems sein oder umgekehrt. Wenn in dem Haustechniksystem weitere elektrische Verbrauchseinrichtungen vorgesehen sind, dann kann das Energiemanagementsystem dazu verwendet werden, diese zu steuern. Die Übertragung der Steuerungsinformationen kann dann von dem Energiemanagementsystem (und nicht unmittelbar durch die Steuereinheit) erfolgen. Die Übertragung der entsprechenden Steuerungsinformationen von dem Energiemanagementsystem kann kabelgebunden, drahtlos oder über Powerline Communication erfolgen.

In einem Haustechniksystem können mehrere elektrische Warmwasserbereiter vorgesehen sein. Die Kommunikation mit dem jeweiligen elektrischen Warmwasserbereiter kann über ein zentrales Energiemanagementsystem in dem Haustechniksystem erfolgen. Eine Steuereinheit kann hierbei mit dem Energiemanagementsystem gekoppelt sein oder die Steuereinheit kann in dem Energiemanagementsystem integriert sein. Das Energiemanagementsystem kann dann die relevanten Steuerungsinformationen (Wechsel in die erste oder zweite Betriebsart) an die jeweiligen elektrischen Warmwasserbereiter übertragen. Diese Übertragung kann kabelgebunden, drahtlos oder über Powerline Communication erfolgen.

Alternativ zu einer zentralen Steuereinheit kann in einem Haustechniksystem mit einer Mehrzahl von elektrischen Warmwasserbereitern eine Mehrzahl von Steuereinheiten vorgesehen sein. Hierbei kann beispielsweise jedem elektrischen Warmwasserbereiter eine Steuereinheit zugeordnet werden. Die jeweiligen Steuereinheiten können dann entsprechend den netzorientierten Steuerungsinformationen jeweils eine Steuerinformation an den zugeordneten elektrischen Warmwasserbereiter übermitteln. Diese Übermittlung kann durch ein direktes Kabel, drahtlos oder über Powerline Communication erfolgen.

Gemäß einem Aspekt der vorliegenden Erfindung kann eine zentrale Steuereinheit in dem Haustechniksystem vorgesehen sein, welches eine Mehrzahl von elektrischen Warmwasserbereitern aufweist. Die zentrale Steuereinheit kann dann mittels Steuerungsinformationen die jeweiligen Warmwasserbereiter steuern. Die Übertragung der Steuerungsinformationen kann kabelgebunden, drahtlos oder mittels Powerline Communication erfolgen.

Zur netzdienlichen Steuerung wird demnach ein steuerbarer Warmwasserbereiter vorgesehen, der mindestens eine elektrische Direktheizeinheit zum direkten Erwärmen von Wasser in mindestens einer ersten und zweiten Betriebsart mit unterschiedlichen elektrischen Leistungen aufweist.

Weitere Ausgestaltungen der Erfindung sind Gegenstand der Unteransprüche.

Vorteile und Ausführungsbeispiele der Erfindung werden nachstehend unter Bezugnahme auf die Zeichnung erläutert.
- Fig. 1A bis Fig. 1C: zeigen jeweils eine schematische Darstellung eines Haustechniksystems, welches mit einem Energieversorgungsnetz gekoppelt ist.
- Fig. 2A bis Fig. 2C: zeigen jeweils eine schematische Darstellung eines Haustechniksystems welches an ein elektrisches Energieversorgungsnetz gekoppelt ist.
- Fig. 3A bis Fig. 3C: zeigen jeweils eine schematische Darstellung eines Haustechniksystems, welches an ein elektrisches Energieversorgungsnetz gekoppelt ist.
- Fig. 4A bis Fig. 4C: zeigen jeweils eine schematische Darstellung eines Haustechniksystems, welches an ein elektrisches Energieversorgungsnetz gekoppelt ist,
- Fig. 5A bis Fig. 5C: zeigen jeweils eine schematische Darstellung eines Haustechniksystems, welches an einem Energieversorgungsnetz gekoppelt ist, und
- Fig. 6A bis Fig. 6C: zeigen jeweils einen Graphen zur Veranschaulichung einer Steuerung des Warmwasserbereiters.

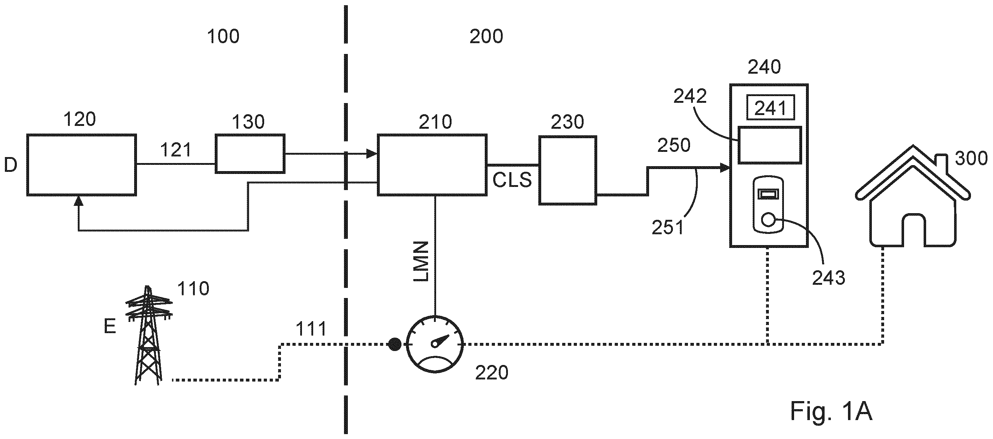

Fig. 1A bis 1C zeigen jeweils eine schematische Darstellung eines Haustechniksystems, welches mit einem Energieversorgungsnetz gekoppelt ist. Das Haustechniksystem 200 ist mit dem Energieversorgungsnetz 100 gekoppelt. Das Energieversorgungsnetz 100 weist ein elektrisches Übertragungsnetz 100 auf, welches über einen Netzverbindungspunkt 111 mit dem Haustechniksystem 200 gekoppelt ist. Hierbei ist ein Energieversorgungszweig E vorgesehen, welcher dazu dient, elektrische Energie dem Netzverbindungspunkt 111 zuzuführen. In dem Energieversorgungsnetz 100 ist ein Netzbetreiber 120 vorgesehen, welcher Daten und Steuerungsinformationen beispielsweise mittels eines steuerbaren lokalen Systems (controllable local system CLS) 130 eine Datenschnittstelle 131 für das Haustechniksystem 200 zur Verfügung stellt.

Das Haustechniksystem 200 weist optional mindestens einen elektrischen Verbraucher 300 auf und kann einen Smart Meter Gateway SMGW 210, eine Messeinheit 220 und mindestens einen elektrischen Warmwasserbereiter 240 aufweisen. Die Messeinheit 220 ist mit dem Netzverbindungspunkt 111 gekoppelt und erfasst die an das Haustechniksystem 200 abgegebene elektrische Leistung, die Netzspannung und/oder die Netzfrequenz. Das Haustechniksystem 200 weist ferner eine Steuereinheit 230 auf, welche Steuerungsinformationen in Form eines Steuersignals 250 an mindestens einen elektrischen Warmwasserbereiter 240 überträgt. Der elektrische Warmwasserbereiter 240 kann mindestens eine elektrische Direktheizeinheit 241, ein Bedienelement 243 und einen Kontaktanschluss 242 aufweisen.

In den Beispielen von Fig. 1A bis 1C kann eine netzorientierte Steuerungsinformation 121 von dem Netzbetreiber 120 an die Steuereinheit 230 übertragen werden. Dies kann beispielsweise mittels des steuerbaren lokalen Systems CLS 130 und des Smart Meter Gateways 210 erfolgen. Alternativ dazu kann diese Information auch auf andere Art und Weise an die Steuereinheit 230 übertragen werden. In den Beispielen der Fig. 1A bis 1C kann die Steuereinheit 230 dann die Steuerungsinformationen an den elektrischen Warmwasserbereiter 240 übertragen.

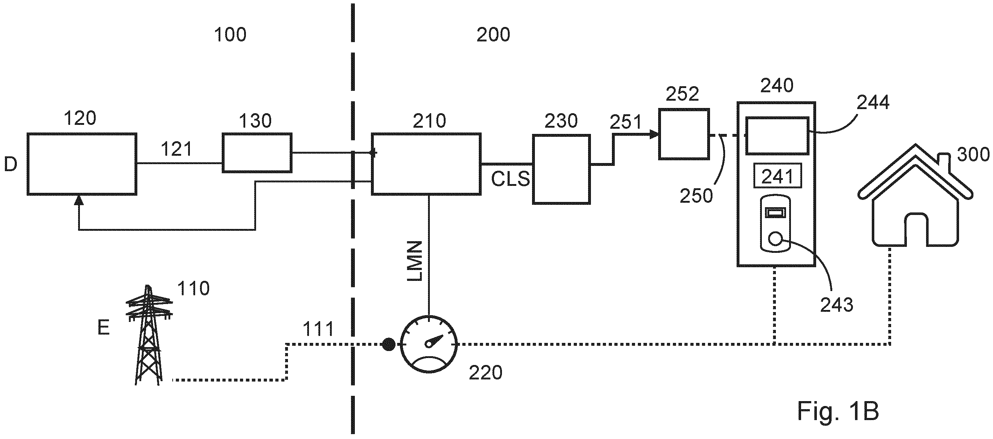

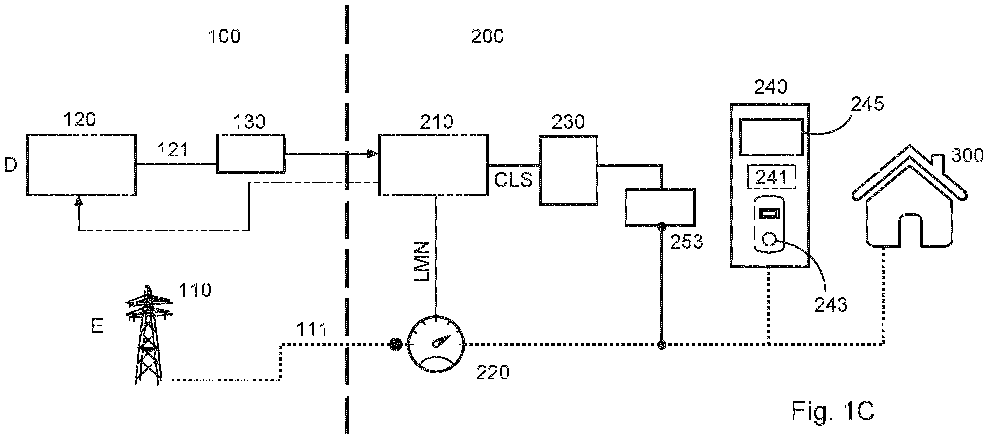

In Fig. 1A erfolgt dies mittels eines Kabels 251. In Fig. 1B erfolgt dies drahtlos mittels eines Drahtlos-Senders 252 und eines Drahtlos-Empfängers 244 in den Warmwasserbereiter 240 und in Fig. 1C erfolgt dies mittels einer Powerline Communication mittels eines PLC-Transmitters 253 und eines PLC-Empfängers 245 in dem Warmwasserbereiter.

Damit unterscheiden sich die Beispiele von Fig. 1A bis 1C nur in der Art der Übertragung des Steuerungssignals 250 an den Warmwasserbereiter 240.

Die mindestens eine elektrische Direktheizeinheit 241 kann eine erste und zweite Betriebsart B1, B2 aufweisen. In der ersten Betriebsart B1 kann die elektrische Direktheizeinheit 241 mit der maximalen elektrischen Leistung (Nennleistung) maximal betrieben werden. Die mindestens eine elektrische Direktheizeinheit 241 kann dann in Abhängigkeit von einer Wasseranforderung (beispielsweise beim Duschen) bis zur Nennleistung (Maximalleistung) betrieben werden.

Die elektrische Direktheizeinheit 241 kann in einer zweiten Betriebsart B2 mit einer reduzierten maximal möglichen Leistung betrieben werden. Die maximal mögliche Leistung in der zweiten Betriebsart B2 ist geringer als die Nennleistung (Maximalleistung) in der ersten Betriebsart. Die elektrische Direktheizeinheit 241 kann dann in der zweiten Betriebsart B2 lediglich eine geringere elektrische Leistung aufnehmen.

Die Steuereinheit 230 empfängt die netzorientierten Steuerungsinformationen 121 und gibt ein Steuerungssignal 250 an den elektrischen Warmwasserbereiter 240 aus. Wenn die netzorientierten Steuerungsinformationen 121 eine Anforderung zur Reduzierung der elektrischen Leistungsaufnahme aufweisen, dann aktiviert die Steuereinheit 230 die zweite Betriebsart des elektrischen Warmwasserbereiters 240, was zu einer Reduzierung der maximal möglichen Leistungsaufnahme führt.

Demnach erfolgt eine Steuerung der maximal möglichen Leistungsaufnahme durch den mindestens einen elektrischen Warmwasserbereiter in Abhängigkeit von den netzorientierten Steuerungsinformationen 121 von einem Netzbetreiber und somit in Abhängigkeit von dem Zustand des elektrischen Energieversorgungsnetzes.

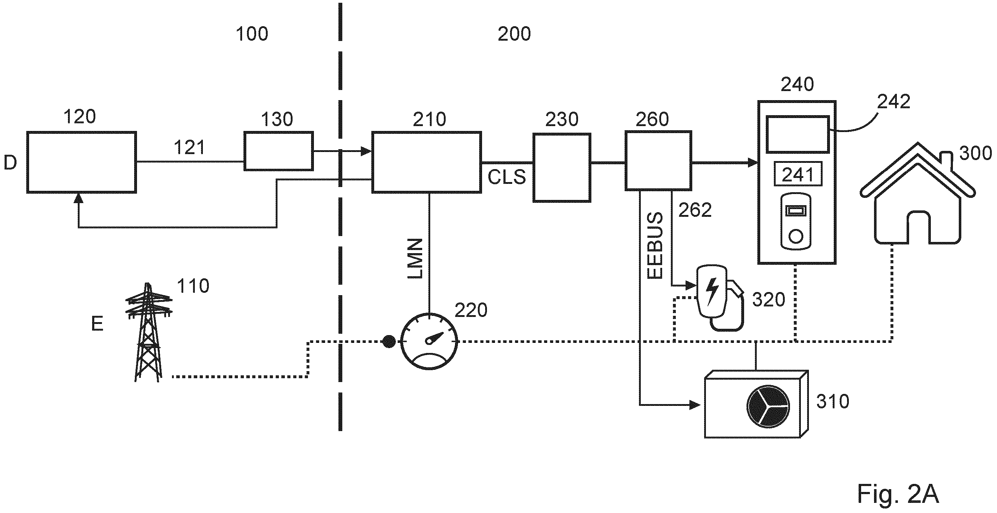

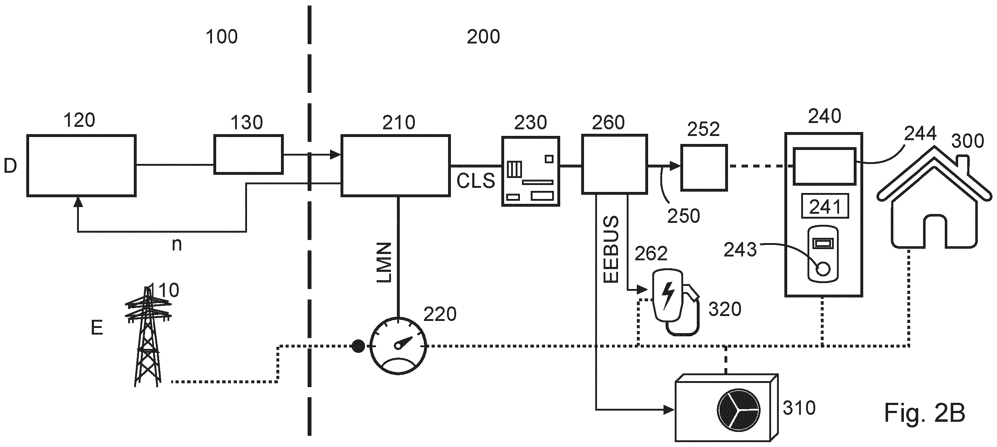

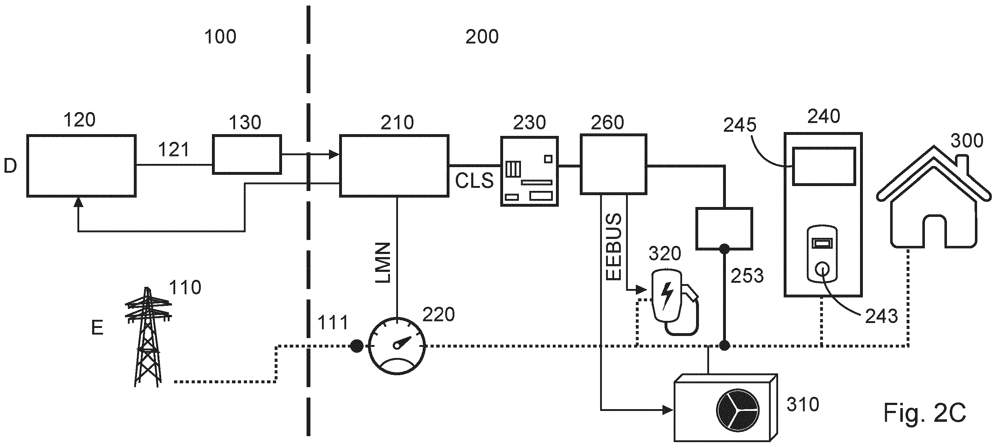

Fig. 2A bis 2C zeigen jeweils eine schematische Darstellung eines Haustechniksystems, welches mit einem elektrischen Energieversorgungsnetz gekoppelt ist. Das Energieversorgungsnetz 100 sowie das Haustechniksystem 200 gemäß den Fig. 2A bis 2C entspricht im Wesentlichen dem Energieversorgungsnetz 100 und dem Haustechniksystem 200 gemäß den Fig. 1A bis 1C. Zusätzlich zu der Steuereinheit 230 kann ein Energiemanagementsystem 260 vorgesehen sein. Das Energiemanagementsystem 260 kann Teil der Steuereinheit 230 sein oder die Steuereinheit 230 kann Teil des Energiemanagementsystems 260 sein. Das Energiemanagementsystem 260 kann hierbei die Übertragung der Steuerungssignale 250 für den elektrischen Warmwasserbereiter 240 übernehmen. Somit kann das Energiemanagementsystem 260 die Steuerungssignale 250 kabelgebunden (Fig. 2A), drahtlos (Fig. 2B) oder mittels einer Powerline Communication (Fig. 2C) an den Warmwasserbereiter 240 übertragen. Die restliche Steuerung der ersten und zweiten Betriebsart B1, B2 kann dabei gemäß der Steuerung der ersten und zweiten Betriebsart B1, B2 von den Fig. 1A bis 1C erfolgen.

In Fig. 2A erfolgt eine kabelgebundene Verbindung zwischen dem Energiemanagementsystem 260 und dem elektrischen Warmwasserbereiter 240. In Fig. 2B ist eine drahtlose Funkstrecke mittels des Drahtlos-Senders 252 und des Drahtlos-Empfängers 244 zwischen dem Energiemanagementsystem 260 und dem elektrischen Warmwasserbereiter 240 vorgesehen. In Fig. 2C wird eine Powerline Communication zwischen dem Energiemanagementsystem 260 und dem elektrischen Warmwasserbereiter 240 mittels des PLC-Transmitters 253 und des PLC-Empfängers 245 vorgesehen.

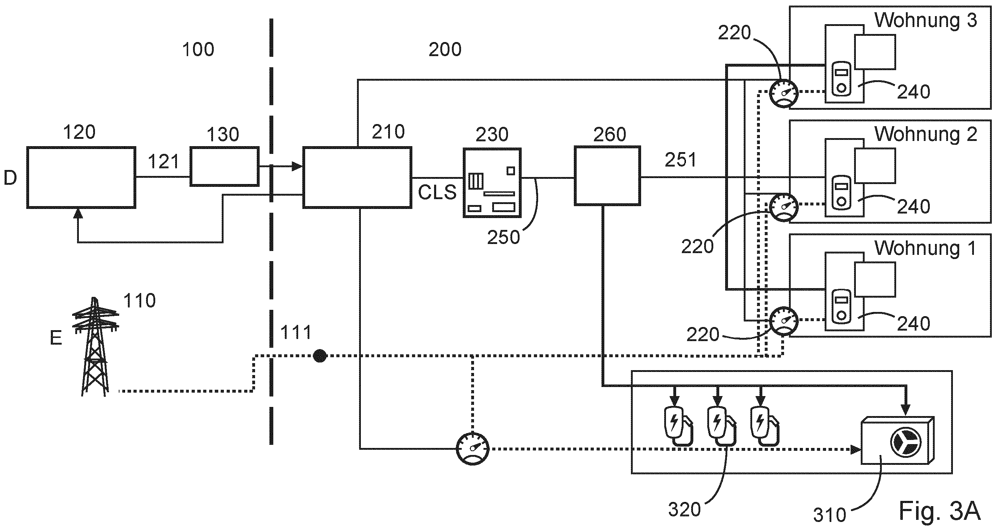

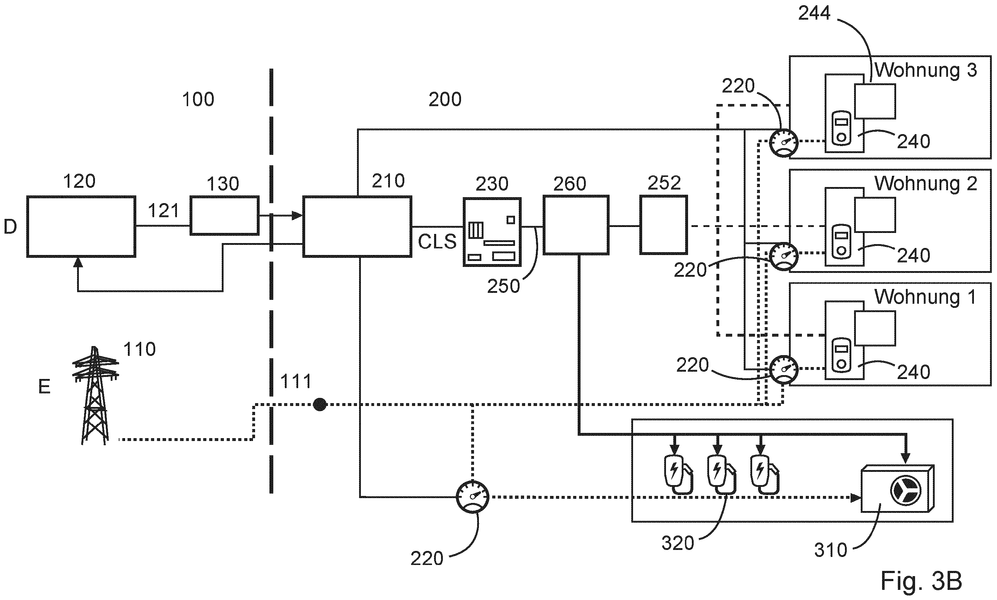

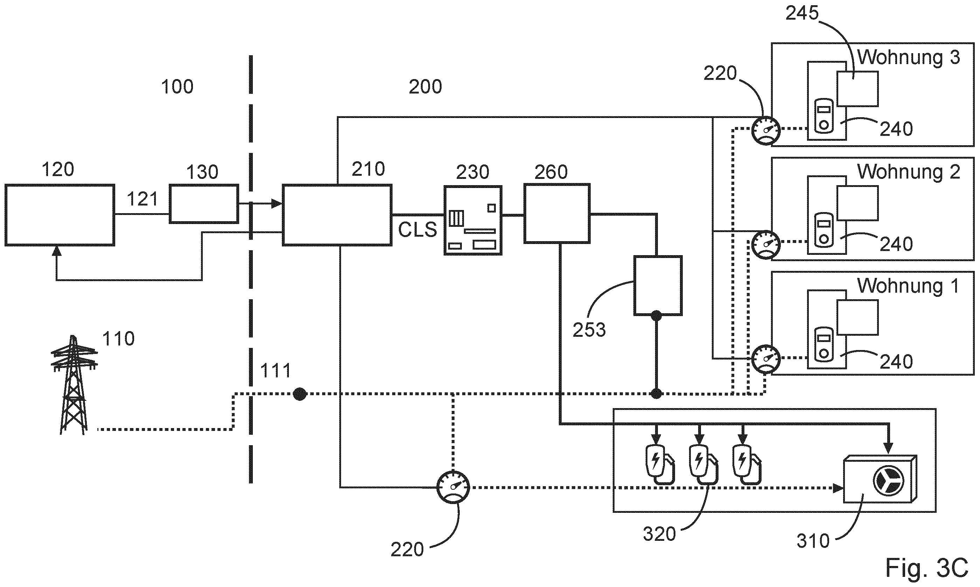

Fig. 3A bis 3C zeigen jeweils eine schematische Darstellung eines Haustechniksystems, welches mit einem elektrischen Energieversorgungsnetz gekoppelt ist. Das Energieversorgungsnetz gemäß den Fig. 3A bis 3C entspricht dem Energieversorgungsnetz gemäß den Fig. 1A bis 1C. Das Haustechniksystem gemäß den Fig. 3A bis 3C weist ein Smart Meter Gateway 210 sowie mehrere Messeinheiten 220 und mehrere elektrische Warmwasserbereiter 240 auf. Dies kann beispielsweise in einem Mehrparteienhaus der Fall sein, so dass in jeder Wohnung ein elektrischer Warmwasserbereiter 240 vorgesehen sein kann. Das Haustechniksystem 200 kann ferner eine Steuereinheit 230 und ein Energiemanagementsystem 260 aufweisen. Das Energiemanagementsystem 260 kann per Kabel jeweils mit den elektrischen Warmwasserbereitern gekoppelt sein (Fig. 3A). Alternativ dazu kann das Energiemanagementsystem 260 drahtlos mit den elektrischen Warmwasserbereitern gekoppelt sein (Fig. 3B). Ferner kann das Energiemanagementsystem 260 mittels einer Powerline Communication mit den elektrischen Warmwasserbereitern 240 gekoppelt sein (Fig. 3C).

Das Energiemanagementsystem 260 kann ferner mit weiteren elektrischen Verbrauchern 300 wie beispielsweise einer Wärmepumpe 310 oder einer elektrischen Wallbox 320 zum Aufladen eines Elektroautos gekoppelt sein.

Das Energiemanagementsystem 260 kann in Abhängigkeit von den empfangenen netzorientierten Steuerungsinformationen 121 die jeweiligen elektrischen Warmwasserbereiter 240 in eine erste oder zweite Betriebsart B1, B2 steuern. Die Steuerung der elektrischen Warmwasserbereiter 240 in die erste und zweite Betriebsart B1, B2 kann wie gemäß den Fig. 1A bis 1C erläutert erfolgen. Somit kann eine Steuerung der elektrischen Warmwasserbereiter 240 in Abhängigkeit von dem Zustand oder der Auslastung des Energieversorgungsnetzes 100 erfolgen.

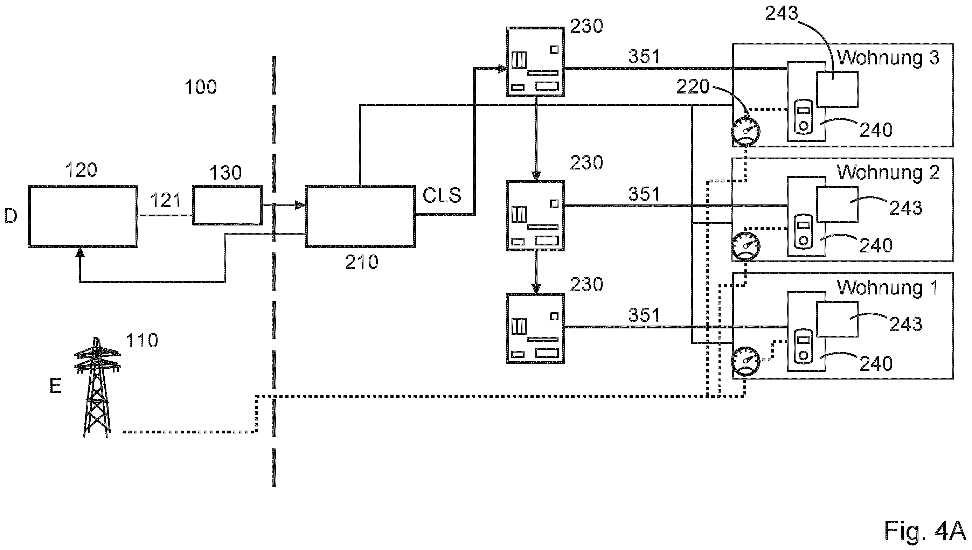

Fig. 4A bis 4C zeigen jeweils eine schematische Darstellung eines Haustechniksystems. Das Haustechniksystem 200 mit dem mindestens einen elektrischen Verbraucher 300 ist mit einem Energieversorgungsnetz 100 gekoppelt. Das Energieversorgungsnetz 100 entspricht dabei dem Energieversorgungsnetz 100 gemäß Fig. 1A bis 1C.

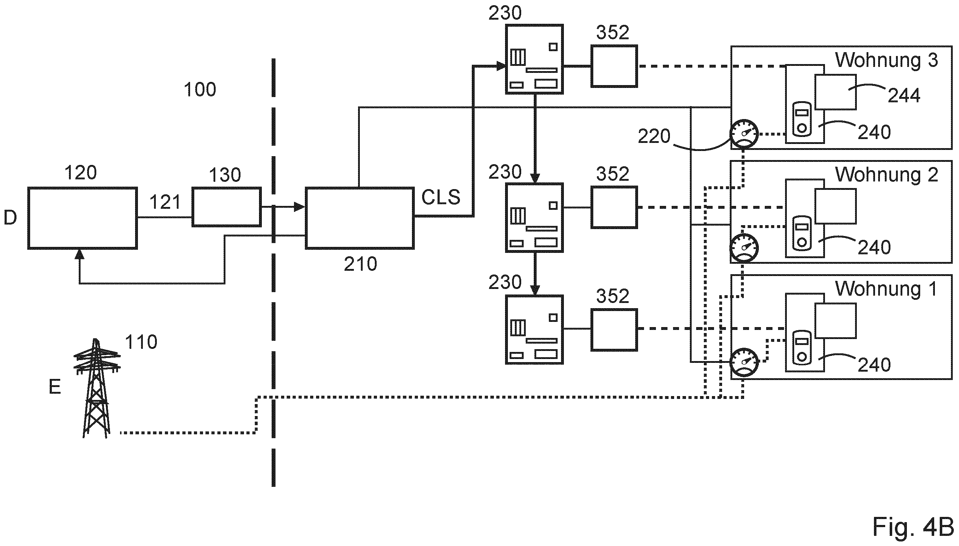

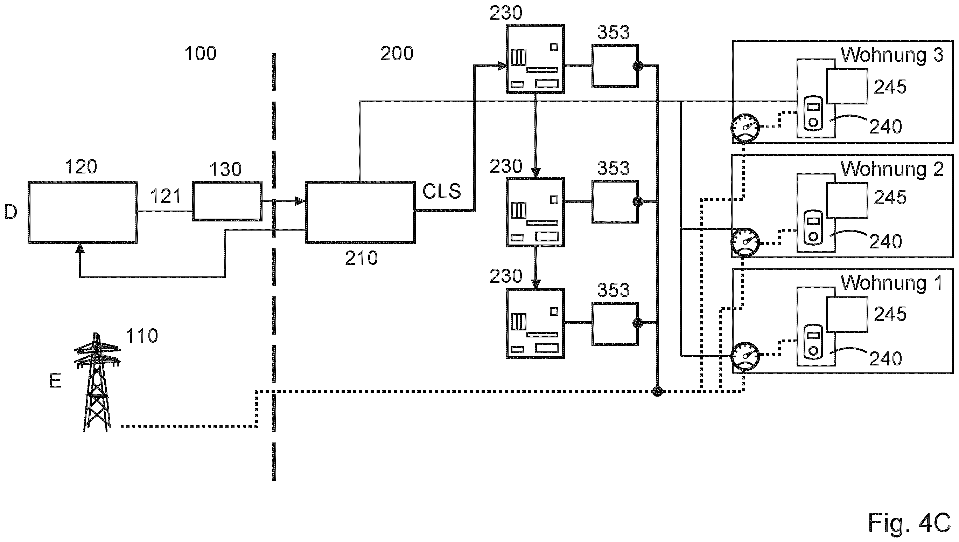

Das Haustechniksystem 200 kann einen Smart Meter Gateway 210 sowie mehrere Steuereinheiten 230 aufweisen. Hierbei kann die Anzahl der Steuereinheiten 230 der Anzahl der elektrischen Warmwasserbereiter 240 in dem Haustechniksystem 200 entsprechen. Damit ist jedem elektrischen Warmwasserbereiter 240 eine Steuereinheit 230 zugeordnet. Die jeweiligen Steuereinheiten 230 können dann entsprechend den empfangenen netzorientierten Steuerungsinformationen 121 den Betrieb der jeweiligen elektrischen Warmwasserbereiter 240 steuern. Die Steuerung kann hierbei drahtgebunden wie in Fig. 4A, drahtlos wie in Fig. 4B oder mittels einer Powerline Communication wie in Fig. 4C erfolgen.

Die Steuerung der mindestens ersten und zweiten Betriebsart B1, B2 der jeweiligen elektrischen Warmwasserbereiter 240 kann wie gemäß Fig. 1A bis 1C beschrieben in Abhängigkeit von den netzorientierten Steuerungsinformationen 121 erfolgen.

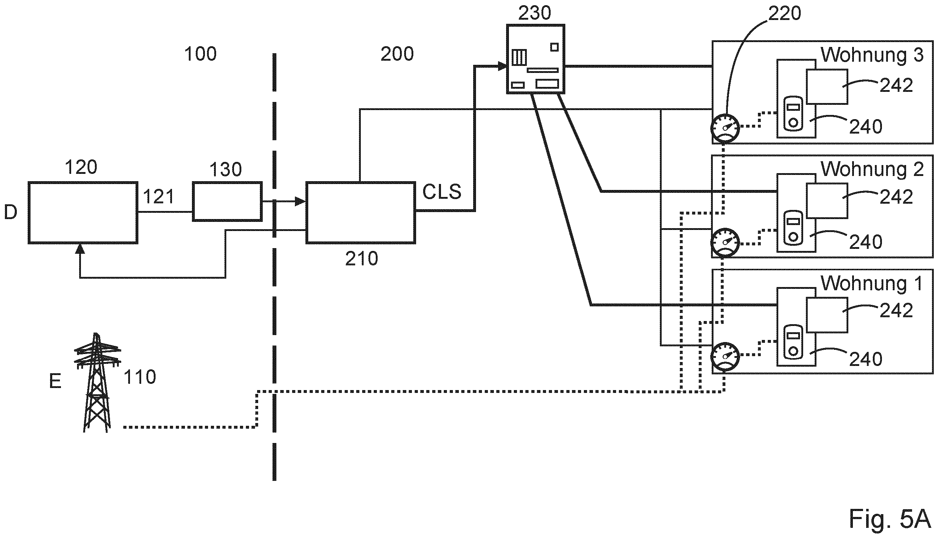

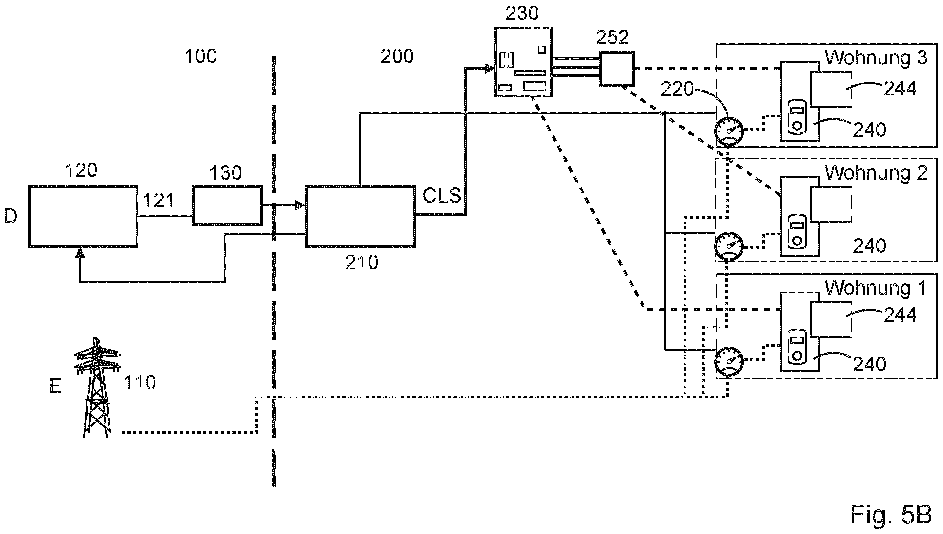

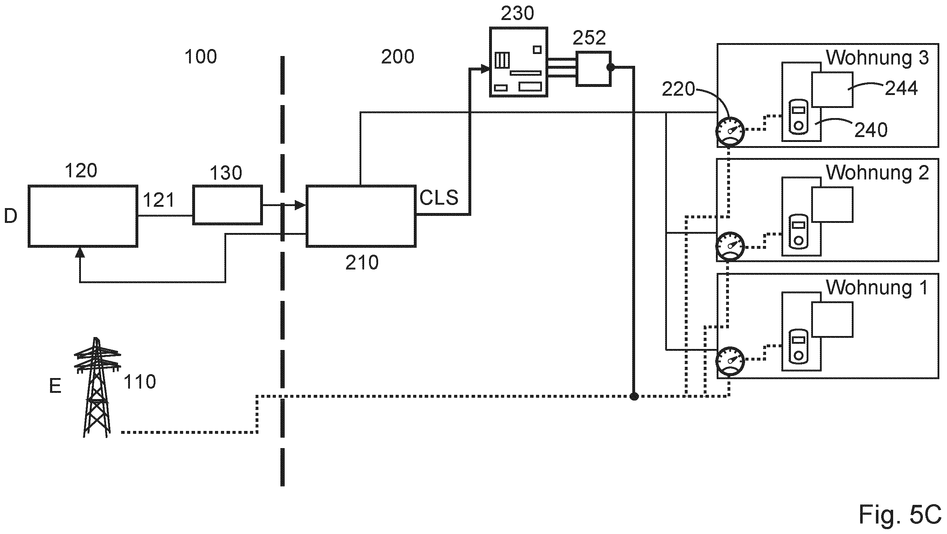

Fig. 5A bis 5C zeigen jeweils eine schematische Darstellung eines Haustechniksystems, welches mit einem Energieversorgungsnetz gekoppelt ist. Das Energieversorgungsnetz 100 gemäß den Fig. 4A bis 4C entspricht dabei dem Energieversorgungsnetz 100 gemäß Fig. 1A bis 1C. Das Haustechniksystem 200 weist beispielsweise ein Smart Meter Gateway 210 und eine zentrale Steuereinheit 230 auf, welche zum Steuern der Mehrzahl der elektrischen Warmwasserbereiter 240 verwendet wird. Die Steuerung kann hierbei drahtgebunden wie in Fig. 5A, drahtlos wie in Fig. 5B oder mittels einer Powerline Communication wie in Fig. 5C erfolgen. Die konkrete Steuerung der jeweiligen elektrischen Warmwasserbereiter 240 erfolgt wie gemäß Fig. 1A beschrieben. Damit kann eine Steuerung der ersten und zweiten Betriebsart B1, B2 der elektrischen Warmwasserbereiter 240 in Abhängigkeit von den netzorientierten Steuerungsinformationen erfolgen.

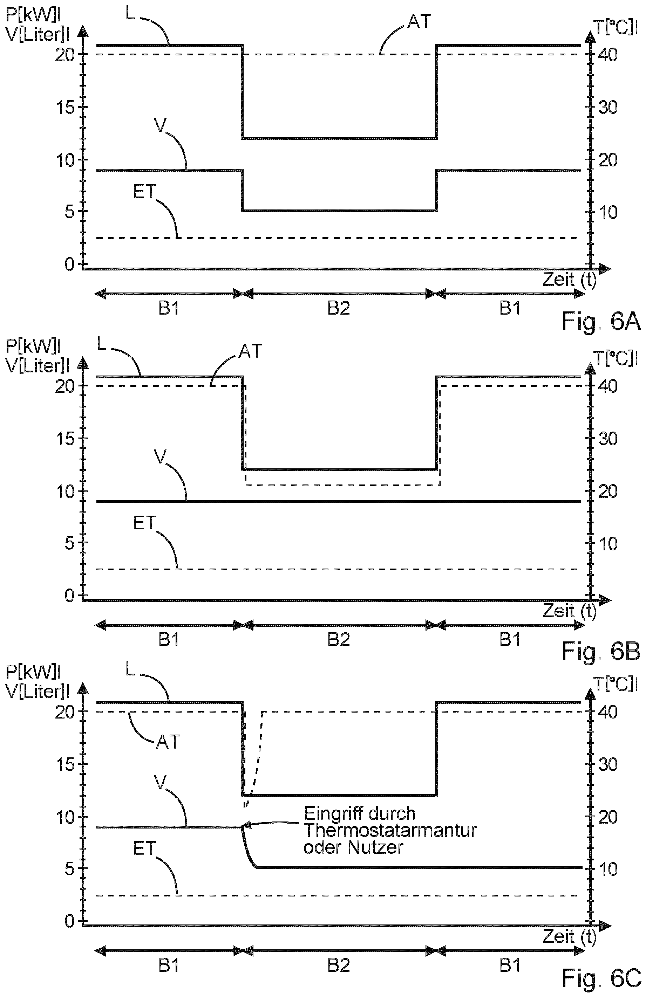

Fig. 6A bis Fig. 6C zeigen jeweils einen Graphen zur Veranschaulichung einer Steuerung des Warmwasserbereiters. Der Warmwasserbereiter kann als elektrischer Durchlauferhitzer ausgestaltet sein. In den Fig. 6A bis 6C ist jeweils die elektrische Leistung L der elektrischen Direktheizeinheit des elektrischen Durchlauferhitzers, ein Volumenstrom V durch die den Durchlauferhitzer, eine Einlauftemperatur ET am Eingang des Durchlauferhitzers, und die Auslauftemperatur AT am Ausgang des Durchlauferhitzers über die Zeit t gezeigt. Insbesondere ist das Verhalten des Durchlauferhitzers in der ersten und zweiten Betriebsart B1, B2 gezeigt. Die zweite Betriebsart BA2 stellt hierbei die netzorientierte Steuerung mit reduzierter Anschlussleistung und damit der Betrieb des Durchlauferhitzers mit reduzierte Leistung dar.

In Fig. 6A ist ein Verhalten eines Durchlauferhitzers mit einem elektronisch geregelten Motorventil für die Durchflussregelung dargestellt. Der Durchlauferhitzer weist ein automatisches Durchflussventil (z.B. mit einem Motorventil) auf, welches eine genaue Warmwassertemperatur entsprechend der Soll-Vorgabe ermöglicht. Durch die Steuerung der Durchflussmenge man auch eine Reduzierung der Leistung zumindest teilweise ausgeglichen werden.

Bei der Aktivierung der zweiten Betriebsart B2 als Reaktion auf eine netzorientierte Steuerinformation wird die Leistungsaufnahme L der elektrischen Direktheizeinheit reduziert. Hierbei kann dann durch Steuerung des Volumenstroms, nämlich durch Reduzierung des Volumenstroms, erreicht werden, dass die Auslasstemperatur AT im Wesentlichen konstant bleibt.

In Fig. 6B ist ein Verhalten eines Durchlauferhitzers ohne Motorventil für die Durchflussregelung dargestellt. Bei der Aktivierung der zweiten Betriebsart B2 als Reaktion auf eine netzorientierte Steuerinformation wird die Leistungsaufnahme L der elektrischen Direktheizeinheit reduziert. Da der Volumenstrom gleichbleibt, führt dies zu einer Reduzierung der Auslauftemperatur AT.

In Fig. 6C ist ein Verhalten eines Durchlauferhitzers ohne Motorventil für die Durchflussregelung dargestellt. Bei der Aktivierung der zweiten Betriebsart B2 als Reaktion auf eine netzorientierte Steuerinformation wird die Leistungsaufnahme L der elektrischen Direktheizeinheit reduziert. Zu diesem Zeitpunkt erfolgt ein aktiver Eingriff durch den Nutzer oder alternativ durch eine Thermostatarmatur, um den Volumenstrom zu reduzieren. Dies hat zur Folge, dass die Auslauftemperatur AT nach einem kurzen Einbruch wieder ansteigt z.B. auf die gewünschte Auslauftemperatur. Dies hat zur Folge, dass der Volumenstrom reduziert wird.

Bei einem Durchlauferhitzer ohne Steuerung der Durchflussmenge kann die Durchflussmenge nur manuell eingestellt werden, um die Auslauftemperatur konstant zu halten.

### Bezugszeichenliste:

- 100: Energieversorgungsnetz
- 111: Netzverbindungspunkt
- 120: Netzbetreiber
- 121: Steuerungssignal
- 130: steuerbares lokales System (CLS)
- 131: Datenschnittstelle
- 200: Haustechniksystem
- 210: Smart Meter Gateway (SMGW)
- 220: Messeinheit
- 230: Steuereinheit
- 240: Warmwasserbereiter
- 241: Direktheizeinheit
- 242: Kontaktanschluss
- 243: Bedienelement
- 244: Drahtlos-Empfänger
- 245: PLC-Empfänger
- 250: Steuersignal
- 251: Kabel
- 252: Drahtlos-Sender
- 253: PLC-Transmitter
- 260: Energiemanagementsystem
- 310: Wärmepumpe
- 320: elektrische Wallbox
- E: Energieversorgungszweig

## Patentansprüche

1. Verfahren zum Steuern mindestens eines elektrischen Warmwasserbereiters (240), welcher mindestens eine elektrisch Direktheizeinheit (241) zum direkten Erwärmen von Wasseraufweist, wobei der Warmwasserbereiter (240) mindestens eine erste und eine zweite Betriebsart (B1, B2) aufweist, wobei die erste Betriebsart (B1) eine Normalbetriebsart darstellt, bei der der Warmwasserbereiter (240) mit bis zur Maximalleistung betreibbar ist, wobei die zweite Betriebsart (B2) eine Betriebsart darstellt, bei der der Warmwasserbereiter (240) mit bis zu einer reduzierten Leistung, die kleiner als die Maximalleistung ist, betreibbar ist, mit den Schritten:
- Steuern der mindestens einen elektrischen Direktheizeinheit (241) in der ersten Betriebsart (B1) basierend auf einer Warmwasseranforderung,
- Empfangen von netzorientierten Steuerungsinformationen (121), und
- Steuern der mindestens einen elektrischen Direktheizeinheit (241) in der zweiten Betriebsart (B2) basierend auf einer Warmwasseranforderung und einer reduzierten elektrischen Leistung, wenn die empfangenen netzorientierten Steuerungsinformationen (121) eine Anforderung zur Reduzierung der elektrischen Leistung aufweisen.

2. Verfahren zum Steuern mindestens eines elektrischen Warmwasserbereiters nach Anspruch 1, mit dem Schritt
- Wechseln von der zweiten Betriebsart (B2) in die erste Betriebsart (B1), wenn keine Anforderung zur Reduzierung der elektrischen Leistung in den empfangenen netzorientierten Steuerungsinformationen (121) vorhanden ist oder wenn die empfangenen netzorientierten Steuerungsinformationen (121) eine Anforderung zum Beenden der Reduzierung der elektrischen Leistung aufweisen.

3. Verfahren zum Steuern mindestens eines elektrischen Warmwasserbereiters nach Anspruch 1 oder 2, wobei
eine Steuereinheit (230) vorgesehen ist, welche die netzorientierten Steuerungsinformationen (121) empfängt und ein Steuersignal (250) an die mindestens eine elektrische Direktheizeinheit (241) übermittelt.

4. Verfahren zum Steuern mindestens eines elektrischen Warmwasserbereiters nach Anspruch 3, wobei
die Steuereinheit (230) das Steuersignal (250) drahtgebunden, drahtlos oder eine Powerline Communication an den mindestens einen elektrischen Warmwasserbereiter (240) überträgt.

5. Verfahren zum Steuern mindestens eines elektrischen Warmwasserbereiters nach einem der Ansprüche 1 bis 2, mit dem Schritt
Energiemanagement von elektrischen Verbraucher (300) mittels eines Energiemanagementsystems (260),
wobei das Energiemanagementsystems (260) ein Steuersignal von der Steuereinheit (230) empfängt und das Steuersignal (250) an die mindestens eine elektrische Direktheizeinheit (241) zur Steuerung der ersten oder zweiten Betriebsart (B1, B2) der mindestens einen elektrischen Direktheizeinheit (241) ausgibt.

6. Verfahren zum Steuern mindestens eines elektrischen Warmwasserbereiters nach einem der Ansprüche 1 bis 5, wobei
die von dem mindestens einen elektrischen Warmwasserbereiter (240) aufgenommene elektrische Leistung durch eine Messeinheit (220) erfasst wird und diese Informationen an einen Netzbetreiber (120) als Rückmeldung weitergeleitet wird.

7. Haustechniksystem (200), mit
- mindestens einem elektrischen Warmwasserbereiter (240) mit mindestens einer elektrischen Direktheizeinheit (241) zum direkten Erwärmen von Wasser aufweist,
wobei der Warmwasserbereiter (240) mindestens eine erste und eine zweite Betriebsart (B1, B2) aufweist,
wobei die erste Betriebsart (B1) eine Normalbetriebsart darstellt, bei der der Warmwasserbereiter (240) mit bis zur Maximalleistung der mindestens einen elektrischen Direktheizeinheit (241) betreibbar ist,
wobei die zweite Betriebsart (B2) eine Betriebsart darstellt, bei der der Warmwasserbereiter (240) mit bis zu einer reduzierten Leistung der mindestens einen elektrischen Direktheizeinheit (241), die kleiner als die Maximalleistung ist, betreibbar ist,
- einer Steuereinheit (230), welche dazu ausgestaltet ist,
- die mindestens eine elektrischen Direktheizeinheit (241) in der ersten Betriebsart (B1) basierend auf einer Warmwasseranforderung und mit bis zur Maximalleistung der mindestens einen elektrischen Direktheizeinheit (241) zu steuern,
- netzorientierten Steuerungsinformationen (121) zu empfangen, und
- die mindestens eine elektrischen Direktheizeinheit (241) in der zweiten Betriebsart (B2) basierend auf einer Warmwasseranforderung und einer reduzierten elektrischen Leistung der mindestens einen elektrischen Direktheizeinheit (241) zu steuern, wenn die empfangenen netzorientierten Steuerungsinformationen (121) eine Anforderung zur Reduzierung der elektrischen Leistung aufweisen.

8. Haustechniksystem (200) nach Anspruch 7, mit
einem Energiemanagementsystem (260), welches dazu ausgestaltet ist, ein Energiemanagement von elektrischen Verbrauchern (300) durchzuführen,
wobei das Energiemanagementsystems (260) dazu ausgestaltet ist, ein Steuersignal von der Steuereinheit (230) zu empfangen und das Steuersignal (250) an die mindestens eine elektrische Direktheizeinheit (241) zur Steuerung der ersten oder zweiten Betriebsart der mindestens einen elektrischen Direktheizeinheit (241) auszugeben.
